# EUROPEAN PATENT APPLICATION

(11) **EP 4 765 915 A1**
(43) Date of publication of application: **24.06.2026**
(21) Application number: 24383429.8
(22) Date of filing: 20.12.2024
(51) Int. Cl.: H04W 12/069, H04L 9/00, H04W 12/71, H04W 12/72

(54) **IDENTIFICATION MECHANISM FOR IOT ASSETS USING A TRIPLET OF UNIQUE IDENTIFIERS**

(71) Applicant: TELEFÓNICA IOT & BIG DATA TECH, S.A., 28050 Madrid (ES)
(72) Inventor: LLAMAS BALLESTERO, Agustín, 28050 Madrid (ES); BARRACHINA VEGA, Ian Paul, 28050 Madrid (ES); GODOY OROZCO, Ana María, 28050 Madrid (ES)
(74) Representative: Herrero & Asociados, S.L.

(57) **Abstract**

A system for secure identification of Internet of Things, loT, assets that comprise a communication module and a Subscriber Identity Module, SIM, card, the system comprises an Immutability Certification Service configured to store a tamper-resistant record of an identification triplet, the identification triplet comprising a first identifier comprising an International Mobile Subscriber Identity, IMSI associated with the SIM card of the loT asset, a second identifier comprising an International Mobile Equipment Identity, IMEI associated with the communication module of the loT asset and a certificate provisioned to the loT asset for authentication. Furthermore, the system comprises a Managed Connectivity Platform configured to retrieve the identification triplet from the Immutability Certification Service and validate the identity of the loT asset by comparing identifiers transmitted by verifying if identifiers transmitted by the loT asset match with the identifiers in the stored Identification Triplet and verifying if a private key used to sign the transmission by the loT asset corresponds to a public key of the certificate in the stored identification triplet to detect a mismatch.

## Description

### Object of the invention

The object of the invention is to provide a secure and tamper-resistant identification mechanism for Internet of Things (IoT) assets using a unique triplet of identifiers comprising an International Mobile Subscriber Identity (IMSI), International Mobile Equipment Identity (IMEI), and a certificate. These identifiers, stored in an immutable certification service, ensure robust asset authentication, prevent impersonation, and enhance the security of loT ecosystems by requiring the compromise of all three elements to breach asset identity.

### Background of the invention

The rapid growth of the Internet of Things (IoT) has led to the widespread deployment of loT assets, which include devices such as smart home appliances, wearable devices, industrial sensors, connected vehicles, and smart meters. These loT assets, characterized by their ability to collect, process, and transmit data, play a pivotal role in modern interconnected ecosystems. However, their deployment in accessible and often unattended locations makes them highly vulnerable to tampering, impersonation, and unauthorized manipulation.

Tampering with loT assets, whether physical or digital, poses significant risks, including compromised data integrity, operational disruptions, and potential security breaches. To address these vulnerabilities, existing solutions often rely on identification mechanisms involving one or two unique identifiers, such as the Integrated Circuit Card Identifier (ICCID) of the Subscriber Identity Module (SIM) card and an asset identifier like the IMEI.

While these approaches provide a certain level of security, they suffer from critical drawbacks:
1. Limited Security Scope: Solutions that rely on only one or two identifiers are easier to compromise. Attackers with physical access to the asset can potentially extract and replicate these identifiers.
2. Key Vulnerabilities: If the cryptographic keys used to secure identifiers are stored insecurely or decrypted by attackers, it becomes possible to clone identifiers and impersonate the asset.
3. Unreliable Physical Mechanisms: Some solutions incorporate physical tamper-detection mechanisms, such as alarms or self-destructive systems. However, these mechanisms are prone to failure, unreliable in practice, and may not effectively prevent unauthorized access.

There is a demand for a more robust identification mechanism that not only ensures the secure and unique identification of loT assets but also minimizes the risk of compromise through physical or digital attacks.

The present invention satisfies this demand.

### Description of the invention

The invention addresses these challenges of existing solutions by introducing a triplet of independent identifiers- IMSI, IMEI, and a certificate-stored in an immutable certification service, ensuring unmatched security and traceability.

The present invention proposes a robust and secure mechanism for uniquely identifying Internet of Things (IoT) assets by employing an identification triplet comprising three independent identifiers: the IMSI, the IMEI, and a Certificate. These identifiers are stored in an Immutability Certification Service (108) to ensure their integrity and to provide a complete audit trail of any modifications. This novel approach enhances security by requiring an attacker to compromise all three identifiers to successfully impersonate or tamper with an loT asset, making such attempts highly challenging and resource-intensive.

Hence, in a first aspect, the invention refers to a system for secure identification of Internet of Things, loT, assets that comprise a communication module and a Subscriber Identity Module, SIM, card, the system comprises an Immutability Certification Service configured to store a tamper-resistant record of an identification triplet, the identification triplet comprising a first identifier comprising an International Mobile Subscriber Identity, IMSI associated with the SIM card of the loT asset, a second identifier comprising an International Mobile Equipment Identity, IMEI associated with the communication module of the loT asset and a certificate provisioned to the loT asset for authentication. Furthermore, the system comprises a Managed Connectivity Platform configured to retrieve the identification triplet from the Immutability Certification Service and validate the identity of the loT asset by verifying if identifiers transmitted by the loT asset match with the identifiers in the stored Identification Triplet and verifying if a private key used to sign the transmission by the loT asset corresponds to a public key of the certificate in the stored identification triplet to detect a mismatch.

In a first example, the Immutability Certification Service comprises blockchain technology to ensure secure immutable storage of the Identification Triplet.

In a second example, the Managed Connectivity Platform prevents the loT asset from communicating upon detecting the mismatch.

Optionally, the system further comprising a Public Key Infrastructure PKI, system and wherein the certificate is generated using the PKI system and provides cryptographic authentication for the loT asset.

In another example, the Managed Connectivity Platform is configured to request the identification triplet from the loT asset through a mobile network.

Additionally, the mobile network employs encryption algorithms to generate a Subscription Concealed Identifier (SUCI) to replace the IMSI during transmission.

In a third example, the Managed Connectivity Platform supports on-demand identity validation of the loT asset by requesting and verifying the identification triplet from both the loT asset and the Immutability Certification Service.

Furthermore, the system may comprise a Data Platform configured to store data transmitted by the loT asset using end-to-end encryption.

A second aspect of the present invention refers to a method for secure identification of Internet of Things, loT, assets that comprise a communication module and a Subscriber Identity Module, SIM, card, the method comprising storing in an Immutability Certification Service an identification triplet, comprising a first identifier comprising an IMSI associated with the SIM card of the loT asset, a second identifier comprising an IMEI associated with the communication module of the loT asset, and a certificate provisioned to the loT asset for authentication, retrieving the identification triplet from the Immutability Certification Service with a Managed Connectivity Platform; and validating with the Managed Connectivity Platform the identity of the loT asset by verifying if identifiers transmitted by the loT asset match with the identifiers in the stored Identification Triplet and verifying if a private key used to sign the transmission by the loT asset corresponds to a public key of the certificate in the stored identification triplet to detect a mismatch.

In a first example, the method further comprises logging all modifications to the identification triplet in the Immutability Certification Service (108), wherein each modification is stored as a new entry, maintaining historical traceability for accountability and audit purposes.

In a second example, the method comprises encrypting all signaling traffic containing the IMSI and the IMEI to protect the transmitted identifiers from interception.

In a third example, the method further comprises rejecting duplicate entries of the IMSI, the IMEI , or the certificate during provisioning to the Immutability Certification Service.

Additionally, the method further comprises generating an alert upon detecting the mismatch.

In another example, the method further comprises preventing the loT asset from communicating upon detecting the mismatch.

Optionally, the method further comprises supporting post-quantum cryptographic certificates by the Immutability Certification Service to ensure security against quantum computing threats.

Furthermore, the method further comprises provisioning the certificate to the loT asset automatically by the Managed Connectivity Platform.

### Brief description of the drawings

For a better understanding of the above explanation and for the sole purpose of providing an example, some non-limiting drawings are included that schematically depict a practical embodiment.
Figure 1 shows the identification triplet according to the present invention.
Figure 2 shows components of the system according to the present invention.
Figure 3 to 11 shows different scenarios of attack according to the present invention.
Figures 12 to 19 shows different process of validation/registration according to the present invention.

### Detailed description of the drawings

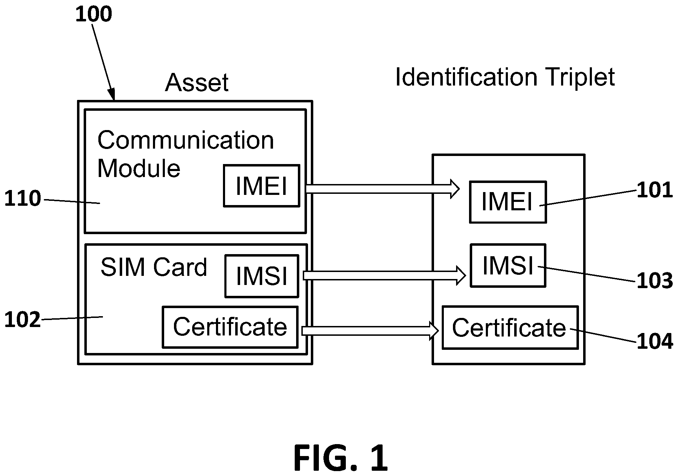

Figure 1 shows the identification triplet which comprises the following components:
The IMSI (103) is a unique identifier embedded in the SIM card (102), which serves to identify the loT asset (100) within the telecommunications network. To protect the IMSI (103) (103) from exposure, modern telecommunications standards like 5G employ encryption mechanisms that replace the IMSI (103) (103) with a Subscription Concealed Identifier (SUCI) during transmission. The IMSI (103) (103) remains securely stored within the SIM card (102) of the loT asset (100), ensuring its protection from unauthorized access.

The IMEI is a globally unique identifier assigned to the communication module (110) within the loT asset (100). It ensures precise and unambiguous identification of the physical device within the network.

Each loT asset (100) is provisioned with a unique cryptographic certificate (104), issued via a Public Key Infrastructure (PKI) system (116). This certificate (104) authenticates the loT asset (100) and guarantees its integrity. It also plays a critical role in secure communication and data validation processes.

The relationship between these three elements may be stored for each loT asset (100) and any communication that has a different set to those stored is rejected. These three identifiers are unrelated and independent of each other, ensuring that the compromise of one or two elements does not provide any means of deducing or calculating the third. This architecture prevents attackers from exploiting vulnerabilities in one identifier to compromise the entire triplet.

The invention's implementation involves several key components that work together to enable secure identification, validation, and management of loT assets (100).

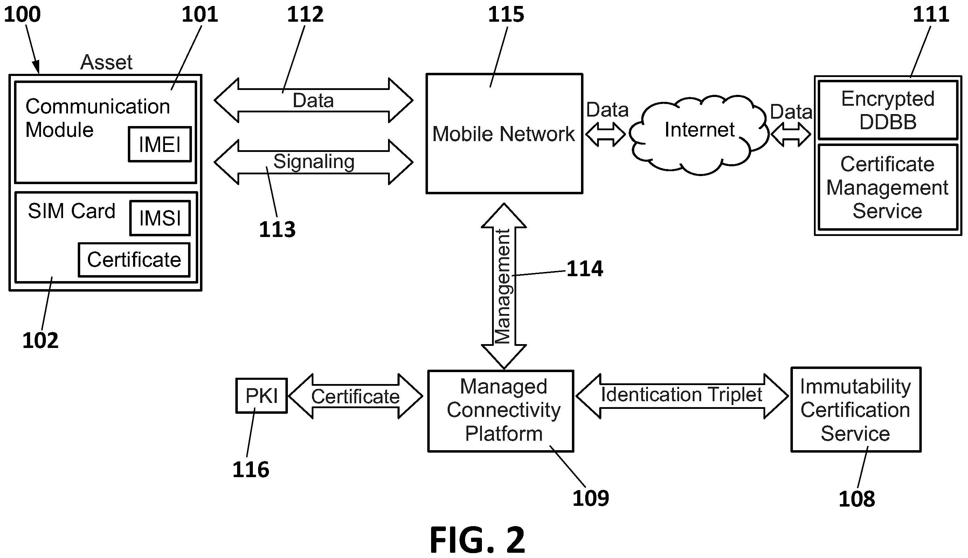

Figure 2 illustrates the global architecture of the solution, which comprises the following elements:
The loT asset (100) represents the physical device that includes a communication module (110) and the SIM card (102) or an integrated SIM (eSIM). It communicates with the mobile network and other systems using encrypted signaling and data traffic. The loT asset owner (100a) is responsible for provisioning the IMSI (103), the IMEI (101), and the certificate (104) during the registration process.

The mobile network (115) is the telecommunications infrastructure that provides connectivity for the loT asset (100). It includes a Home Subscriber Server (HSS), which authenticates the SIM card (102) and ensures the validity of the IMSI (103), allowing the loT asset (100) to connect securely to the network.

The Managed Connectivity Platform (109) manages subscriber connectivity and acts as the intermediary for authentication and triplet validation. It securely provisions the identification triplet to the Immutability Certification Service (108) and raises alerts in the event of anomalies or mismatched identifiers. Additionally, it provides functionality for modifying the triplet and maintaining a history of changes.

The Public Key Infrastructure PKI system (116) is a secure system used for generating cryptographic key pairs and issuing certificates (104). It ensures that each certificate (104) provisioned for an loT asset (100) is unique and verifiable, supporting secure identification and communication.

Immutability Certification Service (108) which leverages immutable storage technologies, such as blockchain, to ensure the secure and unalterable storage of the Identification Triplet. It maintains a complete history of any modifications made to the triplet, providing a transparent audit trail for accountability and traceability.

The data platform (111) is a secure system designed to store encrypted data transmitted by the loT asset. It also includes certificate management services to validate cryptographic keys, ensuring secure and reliable data handling.

The data traffic (112) refers to the encrypted data exchanged between the loT asset (100) and the Data Platform (111), ensuring secure transmission of sensitive information.

The signaling traffic (113) comprises the information necessary for the loT asset (100) to establish and maintain communication with the mobile network (115).

The management traffic (114) is the information exchanged between the Managed Connectivity Platform (109) and the mobile network (115) to manage subscriber connectivity and perform related operations effectively.

For an loT asset (100) to be correctly identified, its identification triplet may match the corresponding triplet stored in the Managed Connectivity Platform (109). If the transmitted triplet does not match, actions may be taken, such as disabling the SIM card (102) to prevent unauthorized communication. The Identification Triplets stored in the Managed Connectivity Platform (109) are subject to the following requirements:
Each identification triplet comprising all three identifiers (the IMSI (103), the IMEI (101), and the certificate (104)); no element of the triplet can be omitted. No two or more Identification Triplets may share the same certificate (104). The certificate (104) can be either a conventional certificate (104) or a post-quantum certificate (104). A post-quantum certificate (104) enables the same identification functionality but supports end-to-end TLS encryption (SIM-to-Platform) using secure post-quantum cryptographic methods. No two or more Identification Triplets may share the same IMSI (103). No two or more Identification Triplets may share the same IMEI (101). The Identification Triplet, composed of the certificate (104), the SIM card (102), and communication module identifiers, can also be stored in the Immutability Certification Service (108) to guarantee its integrity and ensure the availability of complete audit trails.

In cases of legitimate modifications to any element of the Identification Triplet, the Managed Connectivity Platform (109) will update the stored values accordingly. The corresponding changes will also be recorded in the Immutability Certification Service (108) to maintain full traceability of all updates.

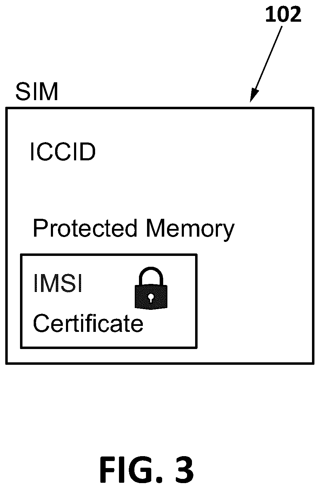

Figure 3 shows the SIM card (102) components. The use of the identification triplet comprising three unique identifiers, provides significant security advantages for the identification of loT assets. The main reasons for employing this approach are as follows:
The SIM card (102) is a critical component containing highly sensitive information essential for its proper functioning. SIM cards are generally accessible to users, making them a potential target for attackers. To address this, extensive security measures have been implemented over the years, including the development of secure storage areas (vaults) within the SIM card (102) to protect sensitive data.

The three identifiers-IMSI (103), the IMEI (101), and certificate (104)-are independent and unrelated to each other. As a result, even if an attacker gains access to one or two of these identifiers, it is impossible to deduce or calculate the third. This independence adds a robust layer of security, significantly complicating any attempt to compromise the loT asset's identity.

### ATTACK SCENARIOS ADDRESSED

First Scenario: Cloned SIM Cards without Physical Access to loT Asset (100)

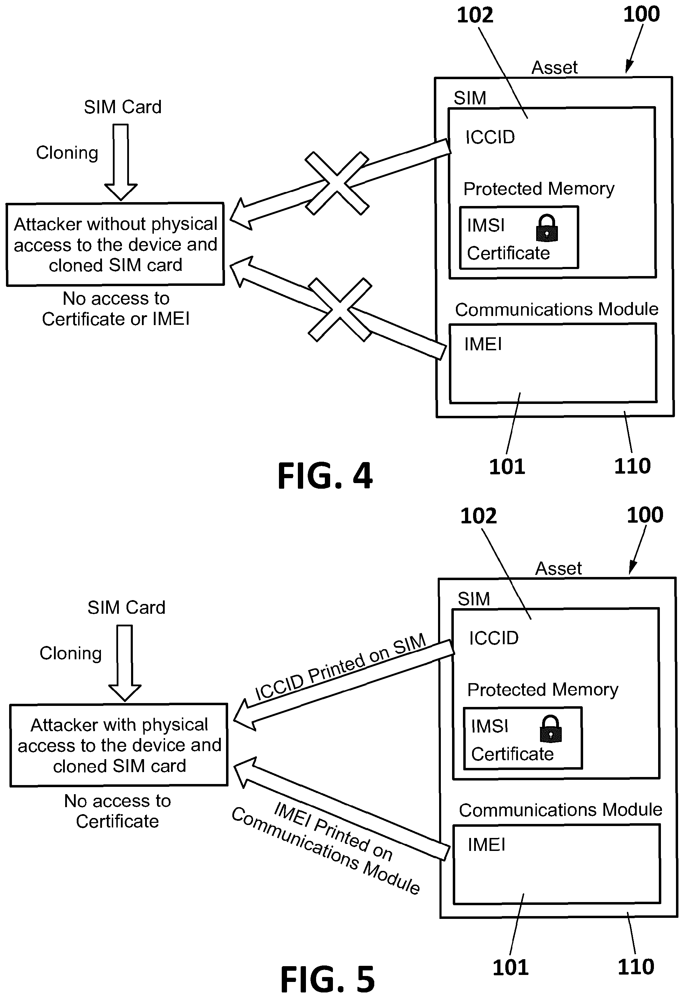

Figure 4 shows the first scenario wherein even if the SIM card (102) is cloned, the data stored within the secure storage of the SIM card (102) cannot be copied or extracted, ensuring that critical information remains protected. In a simpler case, an attacker might attempt to use the cloned SIM card (102) in a device other than the legitimate loT asset. However, in this scenario, the attacker does not possess the unique certificate (104) or the IMEI (101), making it impossible to replicate the identification triplet and successfully impersonate the loT asset.

### Second Scenario: Cloned SIM with Physical Access to loT Asset (100)

Figure 5 shows the second scenario wherein If an attacker gains physical access to the loT asset (100) and successfully clones the SIM card (102) while obtaining any printed or unsecured information present on the loT asset, the attack remains incomplete. In this scenario, the attacker does not have access to the unique cryptographic certificate (104), preventing the successful replication of the complete identification triplet and ensuring the loT asset's identity remains secure.

### Third Scenario: Compromised Certificate without Physical Access to loT Asset (100)

If an attacker manages to steal the certificate (104) at some point during its lifecycle, the attack remains ineffective. In this scenario, the attacker does not have access to the IMEI (101) or the IMSI (103), making it impossible to replicate the complete identification triplet or impersonate the loT asset.

### Fourth Scenario: Compromised Certificate with Physical Access to the loT Asset (100)

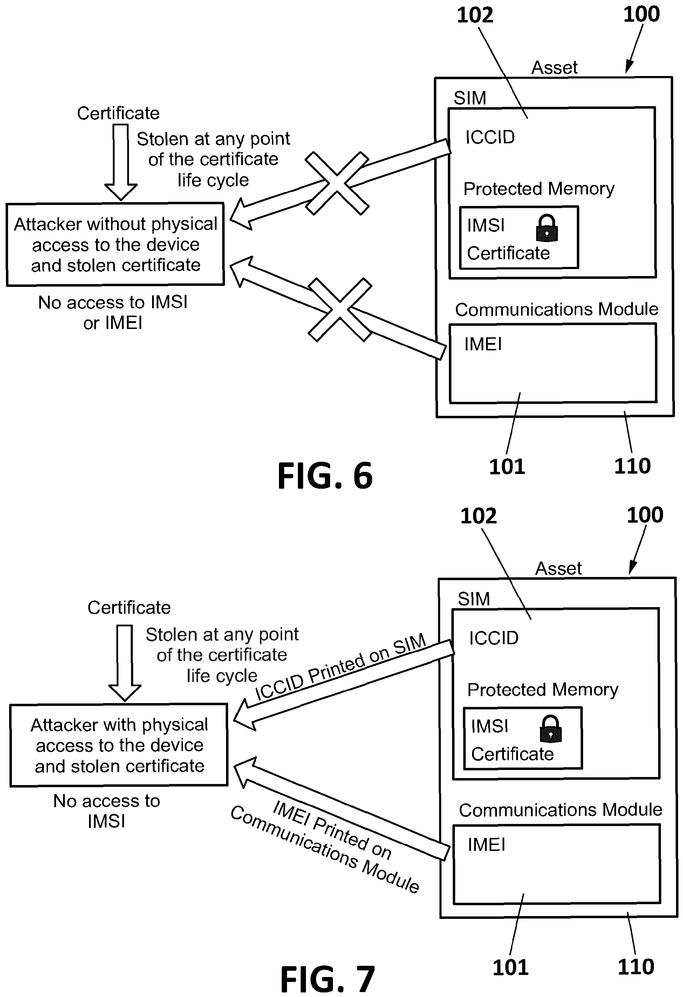

Figure 7 shows the fourth scenario wherein If an attacker steals the certificate (104) during its lifecycle and also gains physical access to the loT asset, the attack remains incomplete. In this scenario, the attacker does not possess the IMSI (103), which is securely stored within the SIM card (102). Without the IMSI (103), the attacker cannot reconstruct the complete identification triplet or compromise the loT asset's identity.

### Fifth Scenario: Compromised IMSI (103) without Physical Access to loT Asset (100)

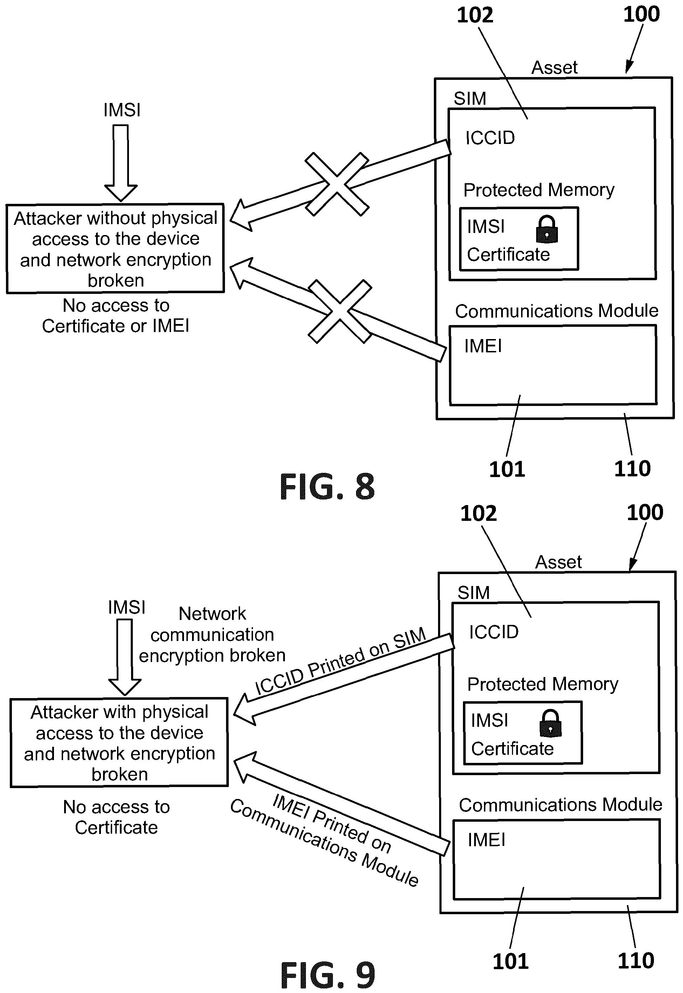

Figure 8 shows the fourth scenario wherein If during communication with the network, the IMSI (103) is transmitted in encrypted form. If an attacker intercepts and manages to decrypt the communication, they may gain access to the IMSI (103). However, in this scenario, the attacker does not possess the IMEI (101) or the certificate (104), preventing the reconstruction of the complete identification triplet and ensuring the loT asset's identity remains secure.

### Sixth Scenario: Compromised IMSI (103) with Physical Access to the loT Asset (100)

Figure 9 shows the fifth scenario wherein building on the previous scenario, if an attacker who has obtained the IMSI (103) also gains physical access to the loT asset, the attack remains incomplete. In this scenario, the attacker does not possess the certificate (104), which is essential to reconstruct the complete Identification Triplet, ensuring the loT asset's identity remains secure.

### Seventh Scenario: Physical Access to the loT Asset (100)

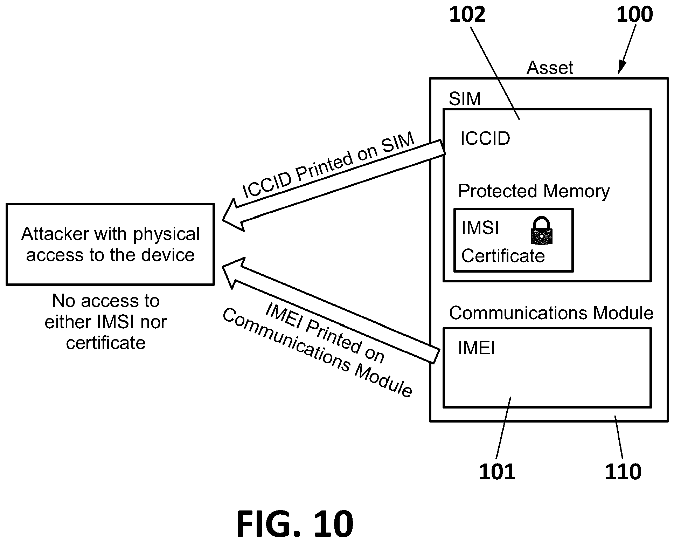

Figure 10 shows the seventh scenario wherein in the simplest case, if an attacker has only physical access to the loT asset, the attack is ineffective. In this scenario, the attacker does not possess the IMSI (103) or the certificate (104), making it impossible to reconstruct the identification triplet and compromise the loT asset's identity.

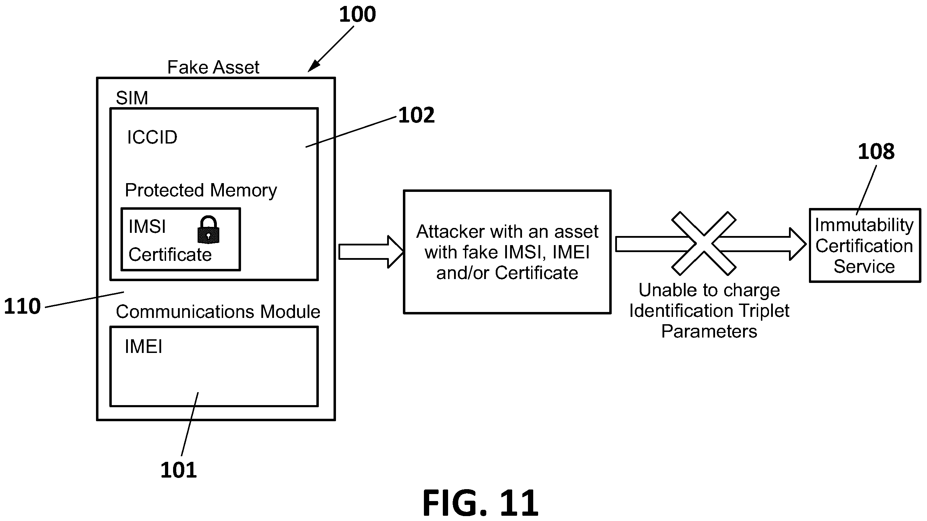

To ensure that the combination of the three identifiers comprising the identification triplet remains secure and resistant to unauthorized modifications, the triplet is stored in an Immutability Certification Service (108) as shown in figure 11. This service ensures the immutability of the stored data. Each identifier within the triplet may be encrypted or hashed before storage, allowing only authorized individuals or services to decrypt or compare hashed values for validation during identification requests. Any legitimate updates to the identification triplet may be performed through the Immutability Certification Service (108), where every change is permanently recorded, maintaining a complete and unalterable history of modifications.

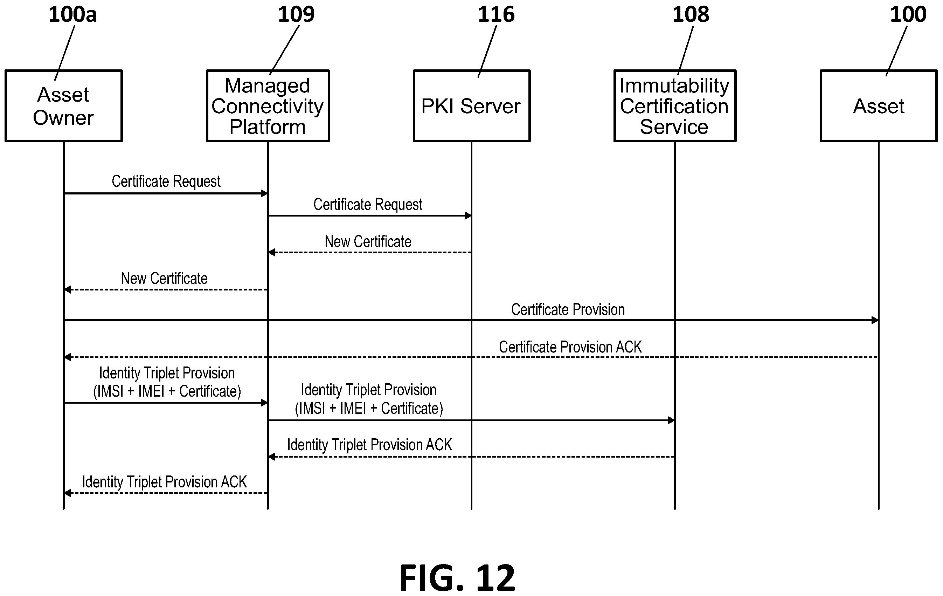

Having these previous considerations, the following process describes how an identification triplet is registered as shown in figure 12:
The process of registering an identification triplet involves the following steps:
- An loT asset, equipped with a communication module (110) and either a SIM card reader or an integrated SIM card (eSIM), has the SIM installed.
- The loT asset owner (100a) identifies the IMEI (101) of the communication module (110) and the IMSI (103) of the SIM card (102).
- The loT asset owner (100a) requests a unique cryptographic certificate (104) from the PKI system (116) through the Managed Connectivity Platform (109) and provisions the certificate (104) on the loT asset.
- Using the Managed Connectivity Platform (109), the loT asset owner (100a) provisions the IMSI (103), IMEI (101), and certificate (104) as the identification triplet for the loT asset.
- If any of these values have already been registered in the Immutability Certification Service (108), the registration process is rejected.
- The Managed Connectivity Platform (109) encrypts or hashes the IMSI (103), the IMEI (101), and the certificate (104), then securely provisions the identification triplet to the Immutability Certification Service (108).
- Once the registration is complete, the loT asset (100) is ready for deployment and operation as needed.

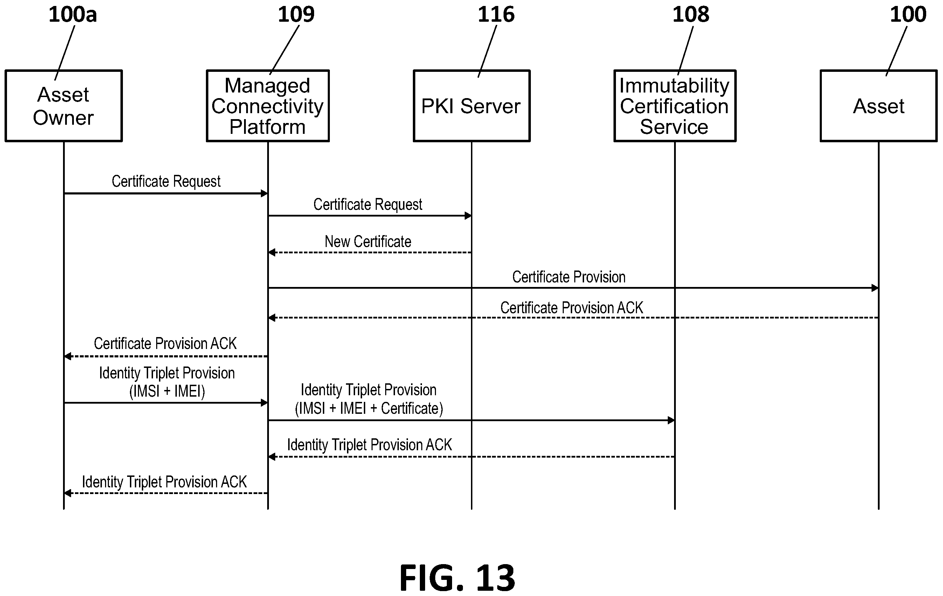

As shown in figure 13, if the Managed Connectivity Platform (109) possesses the functionality to act as a data broker-serving as an intermediary between the asset owner (100a) and the loT asset-it enhances the efficiency of the registration process. In this capacity, the platform can automatically generate and provision the certificate (104) onto the loT asset without requiring manual intervention by the owner. This capability eliminates the need for the asset owner (100a) to directly interact with the PKI system (116) for certificate issuance and management.

The Managed Connectivity Platform (109) seamlessly handles the communication with the PKI system (116), ensuring that the certificate (104) is securely issued, provisioned, and stored on the loT asset. This automated process reduces the complexity and potential for errors in provisioning the certificate (104), particularly in large-scale loT deployments, where manual management of certificates across numerous assets can be impractical and error-prone. By integrating data broker capabilities, the Managed Connectivity Platform (109) ensures a streamlined and secure workflow for provisioning and managing the Identification Triplet.

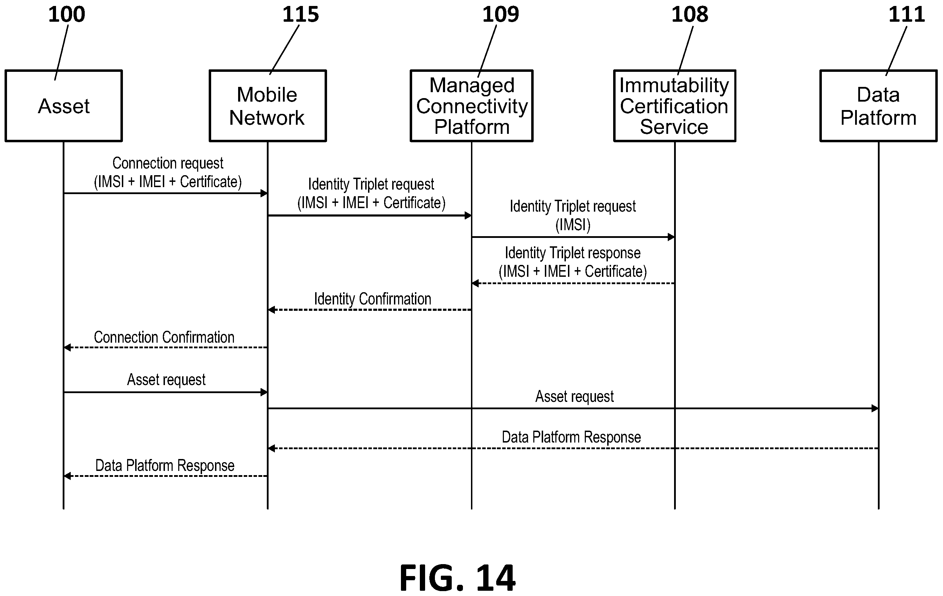

Figure 14 shows the identity validation process. The validation of an loT asset's identity involves a secure and systematic exchange of information among the loT asset, the mobile network (115), the Managed Connectivity Platform (109), and the Immutability Certification Service (108). The steps in this process are as follows:
- Communication Initialization by the loT Asset: The loT asset (100) initiates communication with the network, utilizing the private key of its certificate to encrypt all transmitted data. This encryption ensures the confidentiality and integrity of the transmitted information, safeguarding it against interception or tampering during transit.
- Transmission of Identifiers to the Mobile Network (115): As part of the standard communication protocol, the loT asset (100) transmits its IMSI (103) and the IMEI (101) via signaling traffic (113) to the mobile network (115). These identifiers are fundamental to authenticating the loT asset (100) and are securely sent in compliance with encryption standards.
- Retrieval of Stored Triplet from the Immutability Certification Service (108): Upon receiving the IMSI (103) and IMEI (101) from the loT asset, the mobile network (115) forwards the data to the Managed Connectivity Platform (109). The platform then queries the Immutability Certification Service (108) to retrieve the corresponding identification triplet stored for that loT asset. This triplet includes the IMSI (103), the IMEI (101), and public key associated with the loT asset.
- Comparison of Transmitted and Stored Identifiers: The Managed Connectivity Platform (109) compares the IMSI (103) and the IMEI (101) received from the asset with the stored values retrieved from the Immutability Certification Service (108). The public key retrieved from the Immutability Certification Service (108) may also be used to verify that the communication was encrypted with the corresponding private key.
- Identity Confirmation or Rejection: If the transmitted IMSI (103) and the IMEI (101) match the stored values in the Immutability Certification Service (108), and the communication was encrypted with the private key that corresponds to the public key of the certificate stored in the Immutability Certification Service (108), the asset's identity is confirmed. This confirmation allows the loT asset (100) to proceed with its operations and communication within the network.
- If there is any discrepancy between the transmitted and stored values of IMSI (103) and the IMEI (101), or whether the private key used to encrypt the communication does not correspond to the public key of the stored certificate, the identity validation fails, and appropriate actions may be taken, such as disabling communication or raising an alert for further investigation.

This process ensures that only legitimate loT assets with a valid identification triplet are authorized to communicate within the network, enhancing the security and reliability of loT operations.

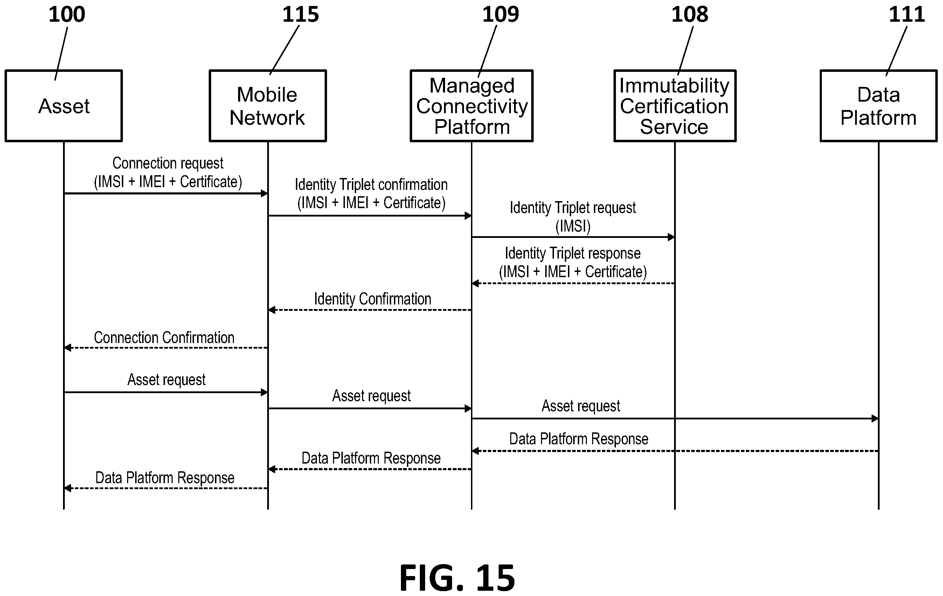

As shown in figure 15, if the Managed Connectivity Platform (109) has the capabilities to work as a data-broker (meaning that is an intermediary between the owner (100a) and the loT asset (100), then the data sent by the loT asset (100) is then redirected by the Managed Connectivity Platform (109).

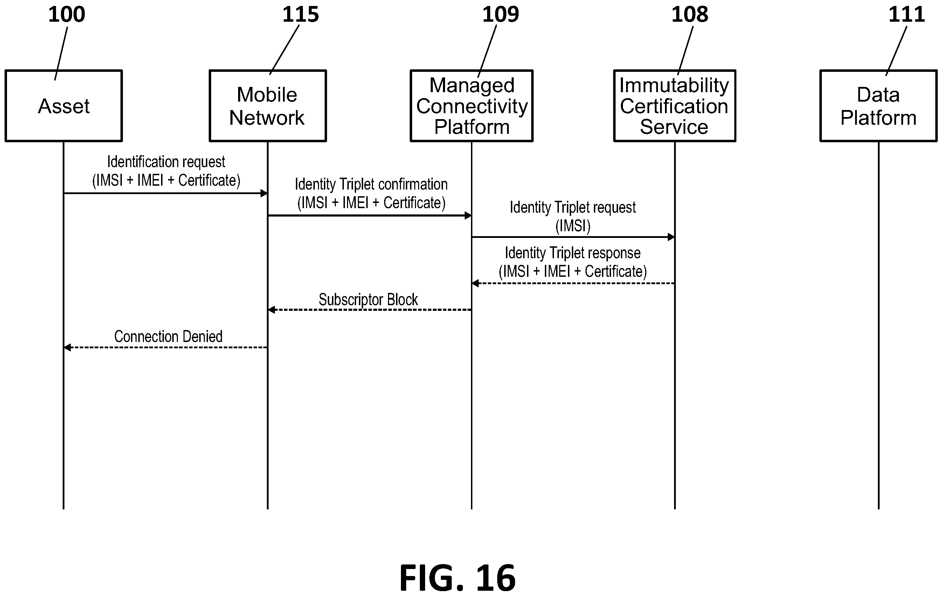

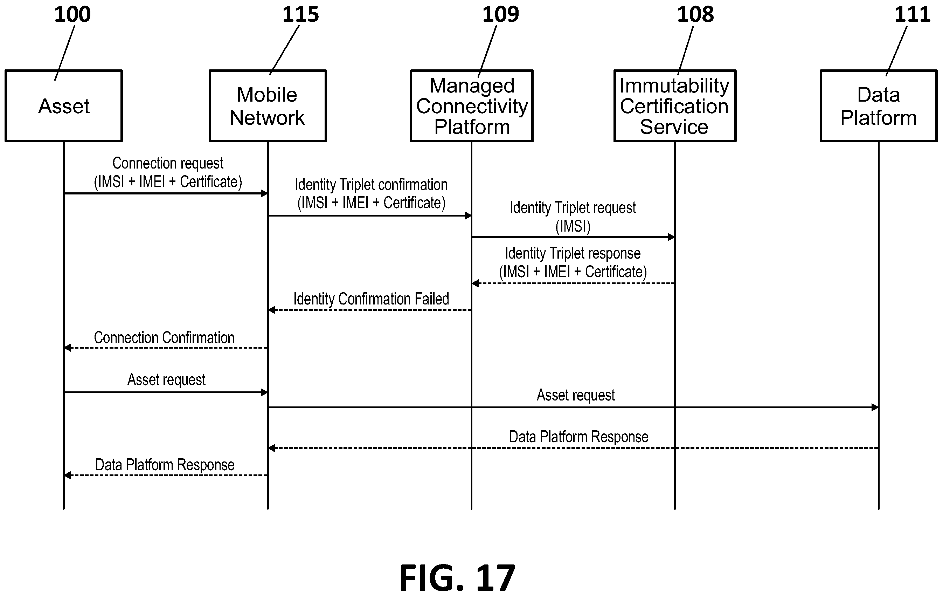

If one or more values are different, the identity is not confirmed. Any action taken when the identity confirmation fails is out of the scope of the present process, but it can be divided in two cases:
When the Managed Connectivity Platform (109) acts as a data broker, it redirects data sent by the loT asset (100) while validating the asset's identity. If the transmitted IMSI (103) and the IMEI (101) match the values stored in the Immutability Certification Service (108), and the private key used to encrypt the communication corresponds to the public key of the certificate stored in the Immutability Certification Service (108), the identity is confirmed, and the data is securely forwarded. If there is a mismatch, the identity cannot be confirmed, and the system may respond in two ways:
- Communication Disabled (see Figure 16): The platform blocks further data transmission from the unverified loT asset.
- Communication Not Disabled (see Figure 17): The platform allows continued communication but flags the issue for further investigation.

These two scenarios offer flexibility, balancing security and operational continuity based on specific requirements.

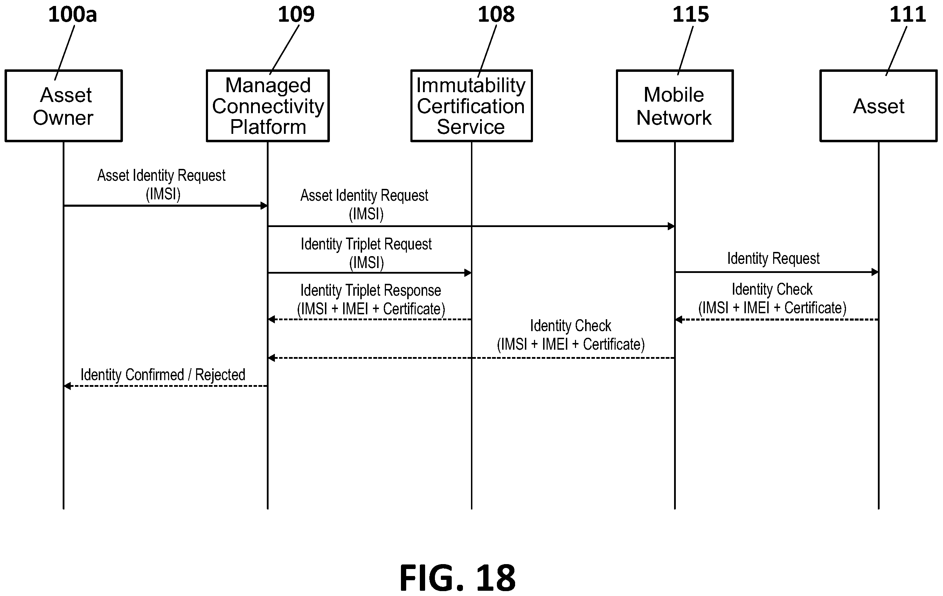

As shown in figure 18 the system allows the loT asset owner (100a) to request an identity verification at any time. The process is as follows:
- Request Initiation: The loT asset owner (100a) requests an identity check via the Managed Connectivity Platform (109).
- Triplet Retrieval from the loT asset: The Managed Connectivity Platform (109) requests the identification triplet comprising the IMSI (103), the IMEI (101), and the certificate (104) from the loT asset (100) through the mobile network (115).
- Triplet Retrieval from the Immutability Certification Service (108): Simultaneously, the platform retrieves the stored identification triplet for the loT asset (100) from the Immutability Certification Service (108).
- Comparison and Validation: The platform compares the two triplets, as explained before. If they match, the identity is confirmed; otherwise, it is rejected.

This process provides a secure and efficient way to verify an asset's identity on demand, enhancing overall network security.

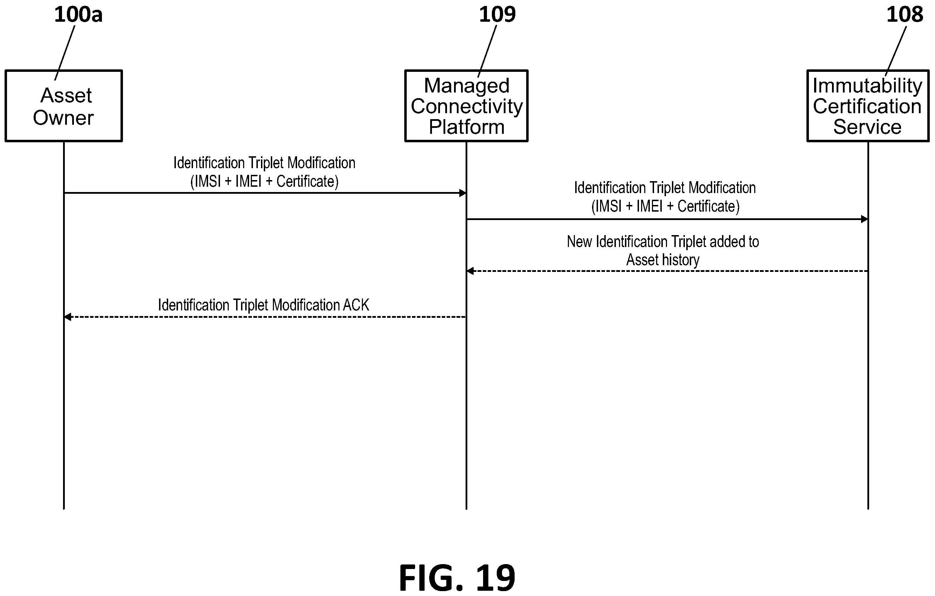

Figure 19 shows the process when the loT asset owner (100a) requests updates to the identification triplet when legitimate modifications are necessary, such as replacing a compromised certificate (104), updating an asset's configuration, or making adjustments due to hardware replacements. This process ensures that changes are securely handled and fully traceable.

The steps are as follows:
- Request for Modification: The loT asset owner (100a) initiates a request to modify one or more elements of the identification triplet i.e. the IMSI (103), the IMEI (101), or the certificate (104) through the Managed Connectivity Platform (109). This request specifies the loT asset (100) and the new values to be updated.
- Update of the Triplet in the Immutability Certification Service (108): Upon receiving the request, the Managed Connectivity Platform (109) securely communicates with the Immutability Certification Service (108) to update the Identification Triplet. The platform ensures that the new values are correctly formatted, encrypted or hashed, and comply with system integrity rules before committing the changes.
- Historical Record of Modifications: The Immutability Certification Service (108) records the new identification triplet and appends it to the history associated with the loT asset. Since the service operates as an immutable storage solution, the previous (deprecated) identification triplet remains permanently stored and cannot be altered or deleted. This guarantees complete traceability of all modifications, ensuring accountability and transparency.

Confirmation of Modification: Once the update is successfully completed, the Managed Connectivity Platform (109) confirms the modification to the loT asset (100) owner. This confirmation may include details of the updated triplet and a reference to the historical record maintained by the Immutability Certification Service (108).

The integration of the identification triplet creates a robust and highly secure mechanism for identifying loT assets. This combination significantly raises the bar for potential attackers, requiring them to compromise all three independent elements to successfully impersonate or tamper with an loT asset.

Each component of the triplet adds a distinct layer of security:
The certificate (104): Cryptographically unique to each loT asset (100) and securely provisioned, it ensures authentication and integrity.

The SIM card (102): Equipped with advanced secure storage (vaults) designed to protect sensitive information, the SIM card (102) is highly resistant to tampering or cloning.

The IMEI (101): A hardware identifier that uniquely ties the triplet to the physical asset, further complicating replication attempts.

The secure storage capabilities of modern SIM cards, particularly in the context of loT applications, make unauthorized access extremely challenging. An attacker would need to bypass multiple layers of encryption and hardware protections to extract or compromise the IMSI (103) or other secure elements stored within the SIM card (102).

Even if an attacker were to succeed in compromising one loT asset, the effort required would apply only to that specific loT asset. Each subsequent asset would require the same complex and resource-intensive attack, making large-scale compromises infeasible. This targeted effort minimizes the risk to other loT assets in the system, limiting the overall impact of a potential breach.

In summary, the use of the identification triplet not only protects individual loT assets but also ensures that the broader loT ecosystem remains secure by exponentially increasing the difficulty and cost of successful attacks.

## Claims

1. A system for secure identification of Internet of Things, loT, assets (100) that comprise a communication module (110) and a Subscriber Identity Module, SIM, card (102), the system comprising:
- an Immutability Certification Service (108) configured to store a tamper-resistant record of an identification triplet, the identification triplet comprising:
a first identifier comprising an International Mobile Subscriber Identity, IMSI (103) associated with the SIM card (102) of the loT asset (100);
a second identifier comprising an International Mobile Equipment Identity, IMEI (101) associated with the communication module (110) of the loT asset; and
a certificate (104) provisioned to the loT asset (100) for authentication;
and
- a Managed Connectivity Platform (109) configured to:
retrieve the identification triplet from the Immutability Certification Service (108); and
validate the identity of the loT asset by
verifying if identifiers transmitted by the loT asset match with the identifiers in the stored Identification Triplet; and
verifying if a private key used to sign the transmission by the loT asset corresponds to a public key of the certificate (104) in the stored identification triplet to detect a mismatch.

2. The system of claim 1, wherein the Immutability Certification Service (108) comprises blockchain technology to ensure secure immutable storage of the Identification Triplet.

3. The system of claims 1 or 2, wherein the Managed Connectivity Platform (109) prevents the loT asset (100) from communicating upon detecting the mismatch.

4. The system of any of claims 1 to 3, further comprising a Public Key Infrastructure PKI, system (116) and wherein the certificate (104) is generated using the PKI system (116) and provides cryptographic authentication for the loT asset (100).

5. The system of any of claims 1 to 4, wherein the Managed Connectivity Platform (109) is configured to request the identification triplet from the loT asset (100) through a mobile network (115).

6. The system of claim 5, wherein the mobile network (115) employs encryption algorithms to generate a Subscription Concealed Identifier (SUCI) to replace the IMSI (103) during transmission.

7. The system (1000) of any of claims 1 to 6, wherein the Managed Connectivity Platform (109) supports on-demand identity validation of the loT asset (100) by requesting and verifying the identification triplet from both the loT asset (100) and the Immutability Certification Service (108).

8. The system (1000) of any of claims 1 to 7, further comprising a Data Platform (111) configured to store data transmitted by the loT asset (100) using end-to-end encryption.

9. A method for secure identification of Internet of Things, loT, assets (100) that comprise a communication module (110) and a Subscriber Identity Module, SIM, card (102), the method comprising:
- storing in an Immutability Certification Service (108) an identification triplet, comprising a first identifier comprising an IMSI (103) associated with the SIM card (102) of the loT asset (100), a second identifier comprising an IMEI (101) associated with the communication module (110) of the loT asset (100), and a certificate (104) provisioned to the loT asset (100) for authentication;
- retrieving the identification triplet from the Immutability Certification Service (108) with a Managed Connectivity Platform (109); and
- validating with the Managed Connectivity Platform (109) the identity of the loT asset by
∘ verifying if identifiers transmitted by the loT asset match with the identifiers in the retrieved identification triplet; and
∘ verifying if a private key used to sign the transmission by the loT asset corresponds to a public key of the certificate in the retrieved identification triplet to detect a mismatch.

10. The method of claim 9, further comprising logging all modifications to the identification triplet in the Immutability Certification Service (108), wherein each modification is stored as a new entry, maintaining historical traceability for accountability and audit purposes.

11. The method of claim 9 or 10, further comprising encrypting all signaling traffic (113) containing the IMSI (103) and the IMEI (101) to protect the transmitted identifiers from interception.

12. The method of any of claims 9 to 11, further comprising rejecting duplicate entries of the IMSI (103), the IMEI (101), or the certificate (104) during provisioning to the Immutability Certification Service (108).

13. The method of any of claims 9 to 12, further comprising generating an alert upon detecting the mismatch

14. The method of any of claims 9 to 12, further comprising preventing the loT asset (100) from communicating upon detecting the mismatch.

15. The method of any of claims 9 to 14, further comprising supporting post-quantum cryptographic certificates by the Immutability Certification Service (108) to ensure security against quantum computing threats.

16. The method of any of claims 9 to 15, further comprising provisioning the certificate (104) to the loT asset (100) automatically by the Managed Connectivity Platform (109).
